# EUROPEAN PATENT SPECIFICATION

(11) **EP 0 265 777 B1**
(45) Date of publication and mention of the grant of the patent: **10.02.1993**
(21) Application number: 87115039.7
(22) Date of filing: 14.10.1987
(51) Int. Cl.: B28B 1/00, B28B 3/00, B32B 18/00, B28B 7/34

(54) **Method of preparing a ceramic monolithic structure having an internal cavity contained therein**
Verfahren zur Herstellung einer monolitischen Keramikstruktur mit einem inneren Holhraum
Methode pour la fabrication d'une structure monolithe en céramique comportant une cavité interne

(30) Priority: 31.10.1986 US 925643
(43) Date of publication of application: 04.05.1988
(73) Proprietor: GTE PRODUCTS CORPORATION, Danvers, MA 01923 (US)
(72) Inventor: Trickett, Elizabeth A., Framingham, MA 01701 (US); Assmus, Richard C., Braintree, MA 02184 (US)
(74) Representative: Grünecker, Kinkeldey, Stockmair & Schwanhäusser Anwaltssozietät

(56) References cited:
- EP-A- 0 220 959
- EP-A- 0 262 848
- US-A- 3 422 173
- US-A- 3 940 301
- US-A- 4 353 957
- US-A- 4 610 741

## Description

This invention relates to a ceramic structure having an internal cavity and a method of preparing the same. More particularly, this invention relates to a ceramic monolithic structure having an internal cavity connected to the surface by a passage and a method of preparing the same.

Typically, materials in high temperature applications require shields incorporating channels for cooling. These shields are usually metal and must be thin and light-weight. They present problems because of their thermal expansion and their limited access and application, e.g. in the case of transparent IR windows. Attempts to isopress and sinter transparent ceramic window followed by drilling cooling manifolds in the ceramic windows has resulted in limited hole geometry capability.

Thin laminated ceramic structures containing small holes (0.1524 mm (.006")) for wire accomodation are routinely prepared for the electronics industry. Such multilayer structures are typically 0.0254 mm (.001") to 1.27 mm (.050") thick and are laminated sandwich fashion with metal circuit layers screened on several if not all layers. Photo resist, carbon or other material patterns may also be layered between ceramic layers and may then be burned out to leave voids, shapes, manifolds, etc. However, very large manifolds in thick layers cannot be prepared by this method as the hole integrity is lost during pressing and in addition burnout problems often result in delamination. To date the tape casting method of ceramic body preparations has been limited by thickness and the lack of three dimensional capability. Dry pressing and extrusion have been considered more favorable for thicknesses greater than an eighth of 25.4 mm (an inch).

The most pertinent prior art of which the applicant is aware is US-A-3,940,301. In this publication there is disclosed a method of manufacturing an open cellular article as, for example, a ceramic open cellular heat exchanger, constructed of a plurality of spaced walls of relatively weak bondable material defining a plurality of elongated passages therethrough which are filled with a disintegratable filler material having sufficient form and strength initially to maintain the walls in their predetermined precisely-space relation and after bonding of the walls into an integral unit such filler material is removed from the structure to re-establish the passages between the walls.

From US-A-4,610,741, there is known a process of manufacturing an electrochemical device comprising a step of interposing an insert consisting essentially of a sublimable material and a cavity to be formed during superposition of green sheets of solid electrolyte bodies and electrodes into an unfired laminar structure, such that the insert is disposed opposite to the unfired layers of some electrodes and further comprises a step of co-firing the unfired laminar structure incorporating the insert so as to cause the insert to diappear through sublimation. Said insert prevents portions of the solid electrolyte bodies from being extruded or displaced into the cavity while the stack of the green sheets of solid electrolyte is compressed into the unfired laminar structure.

Specifically, the above-mentioned references of art do not teach that a supporting media is added after stacking and furthermore do not teach that the cavities within the layered structure are filled after the sheets have been stacked.

The method according to the present invention is defined in Claim 1. Preferred embodiments and further improvements of the inventive method are defined in the subclaims.

In the drawings:
- FIG. 1: is an exploded view showing individual ceramic sheets used in forming a layered structure in accordance with the present invention.
- FIG. 2: is a perspective view of the stacked individual ceramic sheets showing a cavity contained therein connected by passageways to the surface of the layered structure in accordance with the present invention.
- FIG. 3: is a perspective view of the layered structure shown in Fig. 2 showing the cavity and passageways contained therein filled with a supporting media in accordance with the present invention.
- FIG. 4: is a perspective view of the layered structure shown in Fig. 3 after the supporting media has been removed from the cavity contained therein and the passageways connecting the cavity to the surface in accordance with the present invention.
- FIG. 5: is a perspective view of a transparent monolithic structure formed from the layered structure as shown in Fig. 4 by the step of sintering in accordance with the present invention.

For a better understanding of the present invention, together with other and further objects, advantages and capabilities thereof, reference is made to the following disclosure and appended claims in connection with the above-described drawing.

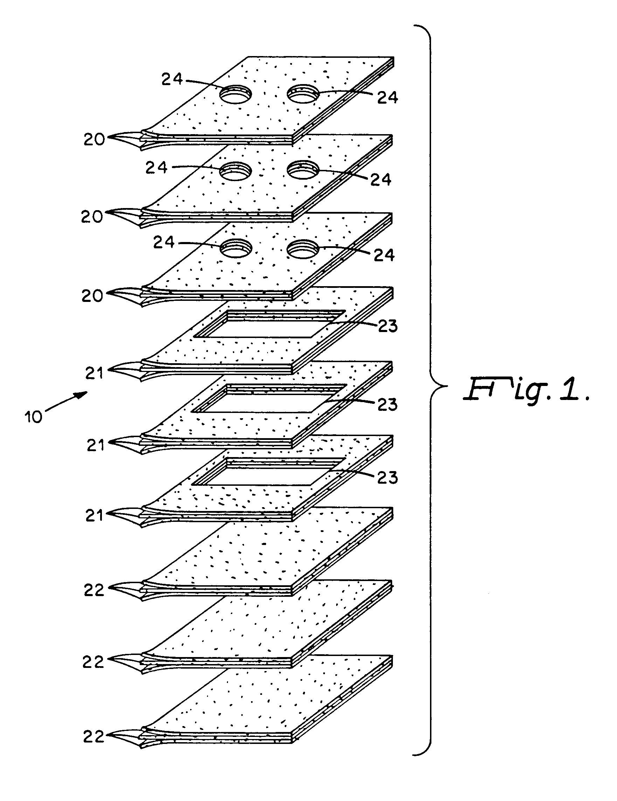

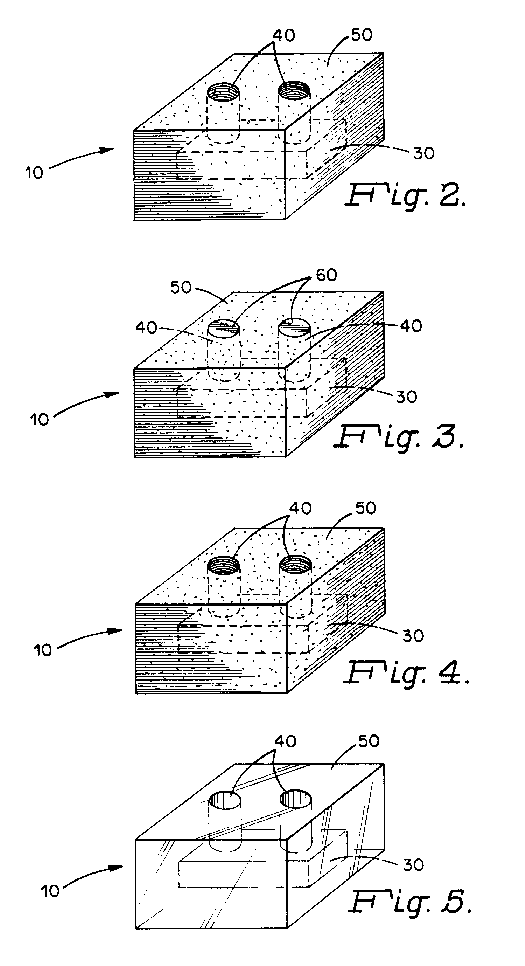

Referring now to the drawings with greater particularity, there is shown in Fig. 1 an exploded perspective view of a layered structure 10 depicting individual sheets of ceramic material 20, 21, 22, made by forming a large sheet of a ceramic material, such as alumina, lanthana, yttria, magnesia, aluminum oxynitride, silicon nitride, and magnesium aluminate or combinations thereof which was cut into individual sheets 20, 21, and 22. Predetermined individual sheets were punched or cut out to form apertures 23 and 24 of individual sheets 20 and 21, respectively. The individual sheets were stacked in a predetermined order to form a layered structure 10 as depicted in Fig. 2. The individual sheets containing apertures 23, such as rectangular shaped holes, formed the cavity 30 shown in Fig. 2 and the individual sheets containing apertures 24, such as round holes, formed the passageways 40 which connected the cavity 30 with surface 50 of the layered structure 10. In Fig. 3 cavity 30 and passageways 40 of the layered structure 10 were filled with a supporting media 60, such as a paraffin wax having a melting point of 60°C, by heating the paraffin wax above its melting point and inserting the wax into the passageways 40 using a hypodermic needle, filling the cavity 30 as well as the passageways 40. The supporting media 60 is then allowed to cool and solidify. The layered structure 10 having the supporting media 60 completely filling the cavity 30 and passageways 40 is then pressed to form said layered structure 10 having a green strength. The temperature obtained during pressing is 60°C.

The supporting media 60 contained in the layered structure 10 as depicted in Fig. 3 is removed by heating (prefiring) the layered structure 10 above the melting point of the supporting media 60 and draining the cavity 30 and passageways 40 by gravity to form a layered structure 10 as depicted in Fig. 4 without supporting media 60. The layered structure 10 as depicted in Fig. 4 is then sintered at a temperature sufficient to form a transparent monolithic structure 10 having a surface 50, a cavity 30 as connected with surface 50 by passageways 40.
1. A large ceramic sheet from about 25.4 um (1 mil) to about 2540 um (100 mils) thick is formed from ceramic powder with suitable binders and/or plasticisers and thinners. The large ceramic sheet is dried and individual sheets are cut from the large sheet.
2. The individual sheets are cut or punched to form apertures such as holes, channels or other geometries in predetermined locations in the individual ceramic sheets. In the event that slant or angled passageways, are required such as jets, a template is moved by the use of a micrometer to align the sheets properly and a ceramic sheet is then punched to form the requisite apertures, then the next ceramic sheet will be punched after incrementally moving the micrometer/template. In this fashion apertures, such as holes, may be positioned with high precision.
3. The punched ceramic sheets are stacked and aligned to form a layered structure about 12.7 mm (0.5 inches) thick and clamped lightly between two templates which may be evacuated if desired.
4. A supporting media, such as paraffin wax, is heated and introduced as a liquid into the holes, e.g. via hypodermic needle and allowed to solidify. The apertures are completely filled with the supporting media which will support the geometric shapes during uni-and/or isostatic pressing. The supporting media material must be compatible with the system, it must be solid and must not soften at the desired pressing temperatures and must have a melting point at a temperature slightly higher than the pressing temperatures. The supporting media must not form a residue during the burnout procedure. An example of such a supporting media is a paraffin wax having a melting point of 60°C. However, the supporting media is not limited just to a paraffin wax. It can be any low melting point material which can conform to the manifold shapes and can be easily removed after pressing and is compatible with the ceramic powder, e.g. Woods metal may be used if some contamination by the metal is not a problem.
5. The structure complete with supporting media is unipressed (may be performed between heated plattens) then isopressed in an evacuated bag to finally consolidate the sample.
6. The structure is removed from the isostatic pressing bag, placed in a prefire/burnout oven on suitable furnace furniture, e.g. Al₂O₃ having a flat shape, or a domed shape, or any shape as required by the final geometry of the product. When large quantities of supporting media are used in the apertures, such as cavities, passageways, manifolds, the structure is prefired in a suitable position to allow the melted supporting media to "drain away" from the structure.
7. Routine sintering and annealing cycles result in transparent monolithic structures containing precise geometric cavities and passageways through which coolant may be allowed to flow.

### Example 1

A powder formulation of about 100 grams of lanthana doped yttria powder was ball milled for 6 hours in methanol. The ball milled material was then dried and any large pieces were broken down in a mortar and pestle. This material was then combined with a binder formulation of 100 grams of 73216 TAM-CERAM (TAM Ceramic Inc. of Niagara Falls, N.Y. trademark) binder, 7 grams of ethylene glycol 200, and 10 grams of 76990 TAM-CERAM thinner. This mixture was then ball milled for 16 hours. The ball milled mixture was then formed into a sheet by spreading the mixture on a glass plate with a doctor blade to form a large sheet of a predetermined thickness such as 10 mils. The large sheet was cut into individual sheets and holes were punched in predetermined locations on 1/3 of the sheets and channels were cut in predetermined locations in another 1/3 of the sheets. Then all of the sheets were stacked and aligned to form a layered structure comprising approximately 45 layers of the individual ceramic sheets. The individual sheets were aligned in such a way as to form the predetermined geometric cavity and passageways from the cavity to the surface. The structure was then placed in a jig and lightly clamped. A paraffin wax was heated to liquify it and then injected into the passageways and the cavity within the layered structure with a hypodermic needle to completely fill the passageways and cavity and then it was allowed to solidify. The solidified wax supports the cavity and passageways during the pressing operation preventing any distortion of their position and geometrics. The structure was then unipressed approximately 17792 N (4000 lbs.) RAM force. This was followed by isopressing at approximately 51.7 MPa (7.5 kpsi). The pressed structure was then prefired at a predetermined firing profile to liquify the paraffin wax so the wax drained away from the cavity and passageways of the layered structure and also to remove binder and other organic materials from the pressed structure. The following prefiring profile was used:

| Temperature | Rate | Time |
|---|---|---|
| 40-150°C | 10°C per hr | 11 hrs |
| 150-300°C | 10°C per hr | 15 hrs |
| 300-400°C | 15°C per hr | 6.6 hrs |
| 400-600°C | 50°C per hr | 4 hrs |
| 600-1200°C | 100°C per hr | 6 hrs |
| 1200°C | Held at 1200°C | 2 hrs |
| Cool at furnace rate to 20°C | | 2 hrs |

The above prefiring profile allows for the complete removal of the paraffin wax and the consolidation of the layered structure prior to sintering. The prefired structure is then sintered at a temperature of about 2150°C for 1½ hours followed by annealing at 1950°C for 1½ hours to form a transparent monolithic structure having the requisite cavity and passageways therein.

### Example 2

A ceramic sheet was prepared by milling 145 lanthana doped yttria powder with 114g of #73216 TAM-CERAM binder and 15g #76990 TAM-CERAM thinner, for 16 hrs. The resulting slip was deaired by allowing it to stand for ½ hr, then formed into a large sheet on a glass plate with a doctor blade. After drying the ceramic sheet was cut into circles 0.35 mm (.012") thick and 101.6 mm (4") outside diameter. Thirty such layers were sandwiched together and pressed between two watch glasses. A clamp was placed on the watch glasses and then the 'confined' layered structure was dried at 75°C for 1 hr. The dried dome-shaped layered structure was removed from the clamped watch glasses and placed on top of an aluminum dome-shaped die. A rubber cover was placed on the layered structure and an aluminum shroud was used to encase the die. The assembly was pressed at 17792 N (4000 lbs.) ram force on a uniaxial press. The resulting pressed dome-shaped layered structure was prefired at the same profile as in Example 1. This prefiring removes any remaining support media if present. The dome-shaped layered structure (dome) was intact with no sign of delamination after the prefiring step or the sintering step. However, after the sintering step one edge of the dome was wavy indicating the need for supportive furnace furniture during the sintering step.

Based on the preceding example, a die has been designed to eliminate the need for watch glasses. Apertures, such as channels and/or holes, can be punched in the individual sheets at predetermined locations to provide a cavity and passageways in the final product. The individual sheets can be stacked and aligned to provide passageways and a cavity in a predetermined location and placed in the metal die. A support media such as paraffin wax can be injected as a hot liquid into the predetermined passageways and cavity to completely fill them. The wax is allowed to cool to form a solid. The stacked sheets forming a dome-shaped layered structure in the metal die are then pressed at 17792 N (4000 lbs.) ram force on a uniaxial press or they can be isostatically pressed. Then the pressed domed shaped layered structure can be removed from the die and prefired at the same temperature and time profile as in Example 1 to remove the support media as discussed in Example 1. A cup shape made from molybdenum and lined with yttria sintering particles (.025mm) to avoid drag is used to hold the dome-shaped layered structure during sintering and prevents the collapse of the dome. Other dies and furnace furniture can be made for other geometries. The sintering cycle is similar to the temperatures and times used in Example 1. The finished monolithic lanthana doped yttria structure has a domed shape with passageways and a cavity to facilitate cooling and is transparent to infrared.

While there has been shown and described what is at present considered the preferred embodiment of the invention, it will be obvious to those skilled in the art that various changes and modifications may be made therein without departing from the scope of the invention as defined by the appended claims.

## Claims

1. A method for preparing a ceramic monolithic structure having an internal cavity and passageways, wherein a layer structure (10) is formed having a surface (50) and a cavity (30) contained therein, by stacking individual sheets (20,21,22) of a ceramic material having apertures (23,24) in predetermined said sheets; said individual sheets are stacked in a predetermined sequence to form a layered structure (10) having a passageway (40) and a cavity (30) therein; said layered structure formed by said stacking of said individual sheets having said surface (50) and said cavity (30) connected to said surface thereof by said passageway (40) and wherein a terporarily used supporting media (60) is provided within said cavity and said passageway,
**characterized by**
filling said cavity and said passageway contained within said layered structure with a supporting media (60) having a melting point greater than a pressing temperature obtained during a subsequent pressing step;
pressing the resulting product sufficiently to form a layered structure, thereafter removing said supporting media (60) from said cavity and said passageway of the product; and
sintering the resulting product for obtaining a ceramic monolithic structure having an internal cavity and passageways contained therein, wherein said passageways (40) connect said cavity to said surface (50) of said monolithic structure (10).

2. A method in accordance with Claim 1 wherein said individual sheets (20,21,22) are formed by the following steps:
Step 1 - formulating a ceramic powder with suitable binders, plasticizers and thinners;
Step 2 - forming a large sheet from the product from step 1;
Step 3 - forming individual sheets from said large sheet from step 2 and
Step 4 - forming apertures in predetermined individual sheets.

3. A method for preparing a ceramic monolithic structure in accordance with Claim 1 wherein said ceramic material is selected from the group consisting of alumina, lanthana, yttria, magnesia, aluminium oxynitride, silicon nitride, magnesium aluminate and combinations thereof.

4. A method for preparing a ceramic monolithic structure in accordance with Claim 1 wherein said supporting media comprises a paraffin wax.

5. A method for preparing a ceramic monolithic structure in accordance with Claim 1 wherein said pressing comprises uni-pressing followed by isopressing.

6. A method for preparing a ceramic monolithic structure in accordance with Claim 1 wherein said apertures comprise holes and channels.

7. A method for preparing a ceramic monolithic structure in accordance with Claim 1 wherein said pressing of said layered structure filled with a supporting media (60) comprises isostatic pressing.

8. A method for preparing a ceramic monolithic structure in accordance with claim 1 wherein said removing in step 4 comprises prefiring the product from step 3 at a temperature sufficient to remove said supporting media contained therein.

9. A method according to claim 1 wherein said individual sheets are stacked in such a manner that said apertures are aligned to form a layered structure having a cavity and passageways contained therein.

10. A method according to claim 9 wherein said stacked sheets are clamped between templates.

11. A method according to claim 1 wherein prior to sintering the product from step 10 the product is prefired at a temperature sufficient to remove the supporting media which has been inserted in step 2.

## Patentansprüche

1. Verfahren zur Herstellung einer monolitischen Keramikstruktur mit einem inneren Hohlraum und Verbindungsgängen, wobei eine Schichtstruktur (10) gebildet wird, mit einer Oberfläche (15) und einem in dieser enthaltenen Hohlraum (30), durch das Stapeln einzelner Schichten (20, 21, 22) eines keramischen Materials mit Löchern (23, 24) an vorherbestimmten Stellen in diesen Schichten; diese einzelnen Schichten werden in einer vorherbestimmten Abfolge gestapelt, um eine Schichtstruktur (10) mit Verbindungsgängen (40) und einem Hohlraum (30) in dieser zu bilden; diese durch das Stapeln der einzelnen Schichten gebildete Schichtstruktur weist diese Oberfläche (50) und diesen Hohlraum (30) auf, welcher mit dieser Oberfläche durch diesen Verbindungsgang (40) verbunden ist und wobei ein zeitweise verwendetes Trägermedium (60) in diesem Hohlraum und diesem Verbindungsgang vorgesehen ist, **gekennzeichnet** durch
Auffüllen dieses in der Schichtstruktur enthaltenen Hohlraumes und dieses Verbindungsganges mit einem Trägermedium (60) mit einem Schmelzpunkt, welcher höher ist als eine während eines nachfolgenden Preßschrittes erzielte Preßtemperatur;
ausreichendes Pressen des resultierenden Erzeugnisses, um eine Schichtstruktur zu bilden, und anschließend entfernen dieses Trägermediums (60) aus diesem Hohlraum und diesem Verbindungsgang des Erzeugnisses; und
Sintern des resultierendes Erzeugnisses, um eine keramische, monolithische Struktur zu erzielen mit einem inneren Hohlraum und in diesem enthaltenen Verbindungsgänge, wobei diese Verbindungsgänge (40) diesen Hohlraum mit dieser Oberfläche (50) dieser monolithischen Struktur (10) verbinden.

2. Verfahren nach Anspruch 1, wobei die einzelnen Schichten (20, 21, 22) durch die nachfolgenden Schritte gebildet werden:
Schritt 1 - Ansetzen eines keramischen Pulvers mit geeigneten Bindemittel, Weichmachen und Verdünnen;
Schritt 2 - Bilden einer großen Schicht aus dem Erzeugnis aus Schritt 1;
Schritt 3 - Bilden einzelner Schichten aus dieser großen Schritt aus Schritt 2 und
Schritt 4 - Ausbilden von Löchern in vorherbestimmten einzelnen Schichten.

3. Verfahren zur Herstellung einer keramischen, monolithischen Struktur nach Anspruch 1, wobei dieses keramische Material aus der Gruppe, bestehend aus Aluminiumoxid, Lathanoxid, Yttriumoxid, Magnesiumoxid, Aluminiumoxinitrid, Siliciumnitrid, Magnesiumaluminat und deren Kombinationen, ausgewählt wird.

4. Verfahren zur Herstellung einer keramischen, monolithischen Struktur nach Anspruch 1, wobei dieses Trägermedium ein Paraffinwachs umfaßt.

5. Verfahren zur Herstellung einer keramischen, monolithischen Struktur nach Anspruch 1, wobei dieses Pressen ein Unipressen gefolgt von Isopressen umfaßt.

6. Verfahren zur Herstellung einer keramischen, monolithischen Struktur nach Anspruch 1, wobei diese Öffnungen Löcher und Kanäle umfassen.

7. Verfahren zur Herstellung einer keramischen, monolithischen Struktur nach Anspruch 1, wobei dieses Pressen dieser mit einem Trägermedium (60) gefüllten Schichtstruktur isostatisches Pressen umfaßt.

8. Verfahren zur Herstellung einer keramischen, monolithischen Struktur nach Anspruch 1, wobei dieses Entfernen im Schritt 4 das Vorbrennen des Erzeugnisses aus Schritt 3 bei einer Temperatur umfaßt, welche ausreichend ist, dieses in diesem enthaltene Trägermedium zu entfernen.

9. Verfahren nach Anspruch 1, wobei diese einzelnen Schichten in solch einer Weise gestapelt werden, daß diese Öffnungen ausgerichtet sind, um eine Schichtstruktur mit in dieser enthaltenen Hohlraum und Verbindungsgänge zu bilden.

10. Verfahren nach Anspruch 9, wobei die gestapelten Schichten zwischen Auflagerplatten eingeklemmt werden.

11. Verfahren nach Anspruch 1, wobei, bevor das Produkt aus Schritt 10 gesintert wird, das Produkt vorgesintert wird bei einer Temperatur, welche ausreichend ist, das Trägermedium, welches im Schritt 2 eingeführt wurde, zu entfernen.

## Revendications

1. Procédé de preparation d'une structure monolithique en céramique comportant une cavite interne et des passages, selon lequel une structure en couches (10) présentant une surface (50) et enfermant une cavité (30), est formée par empilement de feuilles individuelles (20, 21, 22) d'un matériau céramique présentant des ouvertures (23, 24) dans certaines déterminées des dites feuilles les dites feuilles individuelles sont empilées dans un ordre détermine pour former une structure en couches (10) présentant un passage (40) et enfermant une cavité (30); la dite structure en couches formée par le dit empilement des dites feuilles individuelles presentant la dite surface (50) et la dite cavité (30) reliée à la dite surface de l'empilement par le dit passage (40) et selon lequel un agent de support (60) utilisé de façon temporaire est dispose à l intérieur de la dite cavité et du dit passage, **caractérisé en ce que**
on remplit la dite cavité et le dit passage enfermés à l'intérieur de la dite structure en couches avec le dit agent de support (60) présentant un point de fusion supérieur a une temperature de pressage obtenue lors d'une étape de pressage ultérieure;
on presse le produit résultant de façon suffisante pour former une structure en couches. après quoi on ôte le dit agent de support (60) de la dite cavité et du dit passage du produit; et
on fritte le produit résultant pour obtenir une structure monolithique en céramique présentant une cavité interne et des passages, dans laquelle les dits passages (40) relient la dite cavité à la dite surface (50) de la dite structure monolithique (10).

2. Procédé selon la revendication 1 dans lequel les feuilles individuelles (20, 21, 22) sont formées par les étapes suivantes:
étape 1 on formule une poudre en céramique avec des liants, des plastifiants et des solvants appropriés;
étape 2 on forme une grande feuille a partir du produit obtenu à l'étape 1;
étape 3 on forme des feuilles individuelles a partir de la dite grande feuille de l'étape 2; et
étape 4 on forme des ouvertures dans des feuilles individuelles détermineés.

3. Procédé pour la préparation d'une structure monolithique en céramique selon la revendication 1 dans lequel le dit matériau en ceramique est choisi dans le groupe comprenant l'alumine, le lanthane, l'yttria, la magnésie, l'oxynitrure d'aluminium, le nitrure de silicium, l'aluminate de magnésium, et des combinaisons de ceux-ci.

4. Procédé pour la préparation d'une structure monolithique en céramique selon la revendication 1 dans lequel le dit agent de support comprend une paraffine solide.

5. Procédé pour la préparation d'une structure monolithique en céramique selon la revendication 1 dans lequel le dit pressage comprend un uni-pressage suivi d'un isopressage.

6. Procédé pour la préparation d'une structure monolithique en céramique selon la revendication 1 dans lequel les dites ouvertures comprennent des trous et des canaux.

7. Procédé pour la préparation d'une structure monolithique en céramique selon la revendication 1 dans lequel le dit pressage de la dite structure en couches emplie d'un agent de support (60) comprend un pressage isostatique.

8. Procédé pour la preparation d'une structure monolithique en céramique selon la revendication 1 dans lequel l'enlèvement a l'étape 4 comporte le pré-chauffage du produit de l'étape 3 a une temperature suffisante pour ôter le dit agent de support qu'il contient.

9. Procédé selon la revendication 1 dans lequel les dites feuilles individuelles sont empilées de telle manière que les dites ouvertures soient alignées pour former une structure en couches enfermant une cavité et des passages.

10. Procédé selon la revendication 9 dans lequel des dites feuilles empilées sont bloquées dans un gabarit.

11. Procédé selon la revendication 1 dans lequel, avant de fritter le produit de l'étape 10, le produit est pré-chauffé à une temperature suffisante pour ôter l'agent de support qui a éte introduit au cours de l'étape 2.
